# FASCICULE DE BREVET EUROPEEN

(11) **EP 0 928 881 B1**
(45) Date de publication et mention de la délivrance du brevet: **14.04.2004**
(21) Numéro de dépôt: 99400019.8
(22) Date de dépôt: 07.01.1999
(51) Int. Cl.: F01D 21/04, F16C 17/20, F16C 17/24, C23C 4/00

(54) **Turbomachine a freinage mutuel d'arbres concentriques en cas de rupture**
Turbomaschine mit konzentrischen Wellen, die beim Bruch eine Bremswirkung auf einander ausüben
Turbomachine with concentric shafts which in case of a shaft rupture have a braking action on each other

(30) Priorité: 09.01.1998 FR 9800145
(43) Date de publication de la demande: 14.07.1999
(73) Titulaire: Snecma Moteurs, 75015 Paris (FR)
(72) Inventeur: Chevrollier, Alain Louis André, 77000 Melun (FR); Lebiez, Philippe Charles Alain, 91210 Draveil (FR); Mons, Claude Marcel, 77176 Savigny le Temple (FR); Mosser, Pierre Etienne, 92170 Vanves (FR)

(56) Documents cités:
- EP-A- 0 765 951
- EP-A- 0 810 152
- DE-A- 2 049 629
- GB-A- 2 046 365
- GB-A- 2 080 486
- US-A- 3 880 479
- US-A- 4 269 903

## Description

L'invention a trait à une turbomachine dont deux arbres concentriques sont soumis à un freinage mutuel en cas d'avarie.

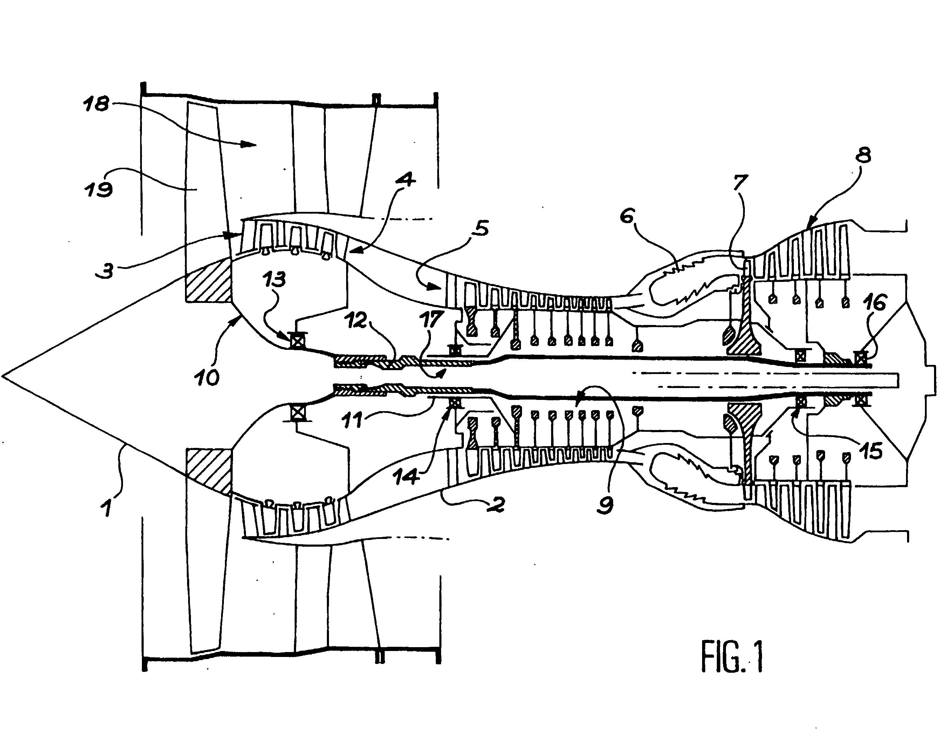

Un exemple concret d'une telle situation peut être expliqué avec la figure 1 qui illustre un moteur d'avion d'un modèle très répandu de nos jours. Le moteur comprend un rotor 1 qu'entoure un stator 2, et une veine principale 3 de section annulaire les sépare. La veine principale 3 est occupée par des étages d'aubes alternativement solidaires du rotor et du stator pour accélérer et comprimer les gaz avant de bénéficier de l'énergie qu'ils libèrent en se détendant après la combustion du carburant : on trouve ainsi, d'avant en arrière, les aubes d'un compresseur à basse pression 4, les aubes d'un compresseur à haute pression 5, une chambre de combustion 6, les aubes d'une turbine à haute pression 7 et les aubes d'une turbine à basse pression 8. Le rotor 1 est en réalité composé de deux parties : un corps de rotor à haute pression 9 porte les aubes mobiles du compresseur à haute pression 5 et de la turbine à haute pression 7, et un corps de rotor à basse pression 10 porte les aubes mobiles du compresseur à basse pression 4 et de la turbine à basse pression 8. De plus, les corps de rotor à haute et basse pression 9 et 10 comprennent respectivement un arbre à haute pression 11 et un arbre à basse pression 12 qui permettent de les soutenir à l'aide de paliers liés au stator 2 : on trouve d'avant en arrière un palier avant 13 pour l'arbre à basse pression 12, un palier avant 14 pour l'arbre à haute pression 11, un palier arrière 15 pour l'arbre à haute pression 11 et un palier arrière 16 pour l'arbre à basse pression 12. Ces paliers comprennent comme élément actif un ou deux roulements à billes ou à rouleaux qui permettent aux arbres 11 et 12 de tourner à grande vitesse et indépendamment l'un de l'autre ; les arbres 11 et 12, concentriques, sont entièrement séparés mais on remarque qu'ils ne sont séparés que par un petit jeu sur une zone de proximité 17 assez longue située sensiblement au droit du palier avant 14 de l'arbre à haute pression 11.

De nombreux moteurs modernes ont un taux de compression élevé et un grand taux de dilution des gaz de combustion. Ils sont alors munis d'une veine auxiliaire 18 entourant la veine principale 3 et dont l'air qui la parcourt se mêle aux gaz de combustion à l'arrière de la turbine à basse pression 8. L'air qui parcourt cette veine auxiliaire 18 est accéléré par les aubes d'une soufflante 19 solidaire du corps de rotor à basse pression 10 et qui s'étend en avant du compresseur à basse pression 4. Les aubes de la soufflante 18 ont un très grand diamètre et une inertie conséquente. Elles sont en outre les plus exposées à la rupture quand un corps étranger tel qu'un oiseau entre par accident dans le moteur.

Un balourd important apparaît sur le corps de rotor à basse pression 10 dès qu'une aube de la soufflante 19 est rompue, ce qui produit sur lui de très importants efforts de nature vibratoire, qui sont transmis à l'arbre à basse pression 12 et au stator 2 par l'intermédiaire du palier avant 13. Des dommages produits par ces efforts excessifs sont susceptibles de se propager dans tout le moteur. C'est pourquoi on a prévu parfois que le palier avant 13 de l'arbre à basse pression 12 serait fusible en cas d'une telle avarie, c'est-à-dire qu'il casserait ou céderait d'une autre manière. Plusieurs genres de tels paliers cassants sont connus dans l'art, par exemple dans les brevets américains 5417501 et 5433584, ou bien dans le document GB-A-2046365 ; ils comprennent en général une amorce de rupture sur le stator 2 à proximité du palier avant 13, et qui sépare le palier avant 13 du reste du stator 2 ; il s'agit en général d'une portion de faible épaisseur de la structure du stator 2 ou de boulons de liaison de petit diamètre et dont la tige filetée peut être entaillée. L'amorce de rupture est calculée pour se déchirer ou se rompre quand le balourd apparaît, de sorte que le palier avant 13 se détache du stator 2 et cesse de soutenir l'arbre à basse pression 12, qui devient alors libre d'osciller en basculant autour du palier arrière 16, sans plus produire d'efforts excessifs sur le stator 2. Le pilote prévenu de l'avarie arrête entre-temps le moteur, ce qui permet aux arbres 11 et 12 de ralentir et de s'arrêter progressivement. La réparation ultérieure du moteur sera limitée, peut-on espérer, au remplacement des aubes endommagées de la soufflante et du palier cassant.

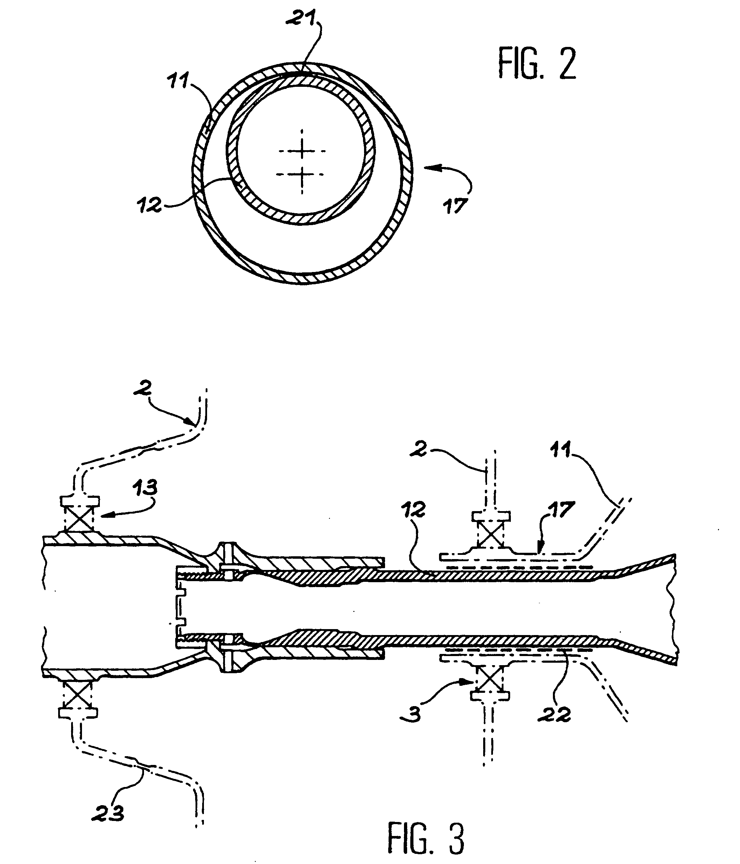

Des dommages supplémentaires et beaucoup plus importants peuvent cependant apparaître à cause du basculement de l'arbre à basse pression 12 autour du palier arrière 16, si les arbres 11 et 12 se touchent à la zone de proximité 17, comme le montre la figure 2, car un échauffement considérable serait alors produit par le frottement qui résulte des vitesse de rotation à la fois très différentes et très élevées ( par exemple 4500 t/mn et 17000 t/mn) de ces deux arbres 11 et 12. La dissipation de chaleur concentrée sur une zone de contact 21 de faible extension angulaire sur la circonférence des arbres serait telle que l'arbre le plus lent, à savoir l'arbre à basse pression 12, pourrait être endommagé à cet endroit, passer à un état métallurgique où il serait moins résistant ou même être rompu ou soudé par friction à l'arbre à haute pression 11. On connaîtrait alors le risque de rupture de l'arbre à basse pression et la perte de la soufflante, ou au moins d'avoir l'obligation de remplacer l'arbre à basse pression 12 à la réparation ; même l'arbre à haute pression 11 peut être ainsi endommagé, quoiqu'il eût paru moins exposé à cause de sa plus grande vitesse de rotation, qui le fait défiler devant la zone de contact 21 et aide à répartir l'échauffement sur sa circonférence.

C'est pour obvier à ces risques de dommages provenant du frottement sur la zone de proximité 17 des arbres 11 et 12 que l'invention fut conçue. Elle consiste, comme on l'illustre à la figure 3, à couvrir l'arbre le plus lent, ici l'arbre à basse pression 12, d'un revêtement 22 à faible conductivité thermique sur sa face externe, dirigée vers l'arbre à haute pression 11 plus rapide, à l'endroit de leur zone de proximité 17. De plus, le revêtement 22 doit présenter de bonnes capacités d'usinage par meulage ou par des procédés analogues, ou, pour parler autrement, il doit être apte à absorber une énergie importante quand une pièce mécanique frotte sur lui : cette propriété est contraire à celle des matériaux composant les paliers ordinaires, qui doivent posséder un coefficient de frottement très bas pour réduire les frottements et ne pas ralentir les pièces qui frottent sur eux. Un tel palier, destiné à soutenir un arbre à balourd sans le ralentir, est décrit dans le document US 3 880 479 A.

Des compositions ou matières convenables pour cette couche sont la zircone yttriée, la zircone, l'alumine, les borures ou les carbures. Le document US 4 269 903 A décrit un alliage formé de tels matériaux mais pour l'application différente des joints à labyrinthe entre un stator et des bouts d'aubes de rotor, afin de ne réduire les fuites de gaz à cet endroit. Ces revêtements sont dits « abradables », car on apprécie qu'ils soient tendres et puissent ainsi être facilement et rapidement sculptés par les bouts d'aubes pendant le rodage de la machine, après quoi leur forme reste invariable et ils n'exercent plus d'effet mécanique, notamment de frottement.

Quand les arbres 11 et 12 frottent l'un sur l'autre à la suite d'une avarie ayant rompu le palier avant 13, le frottement s'exerce entre l'arbre à haute pression 11 et le revêtement 22. Comme ce dernier conduit mal la chaleur, l'arbre à basse pression 12 n'est que peu échauffé ; et la facilité d'usinage par meulage du revêtement 22 contribue à égaliser rapidement les vitesses des arbres 11 et 12 et à interrompre ainsi l'échauffement. Les arbres 11 et 12 deviennent donc rapidement solidaires après que le pilote, prévenu de l'avarie, a arrêté le moteur, et ils ralentissent ensuite ensemble jusqu'à s'arrêter complètement sans produire d'autres dommages. Enfin, les dégâts éventuellement produits par le frottement s'exercent en dégradant soit le revêtement 22, soit l'arbre à haute pression 11 ; l'arbre à basse pression 12, assurant le maintien de la soufflante, étant la pièce de sécurité, reste intact.

Une amorce de rupture du stator 2 près du palier avant 13 a été illustrée et porte la référence 23 : il s'agit d'un amincissement local du stator 2.

Pour résumer, l'invention concerne une turbomachine comprenant un arbre interne à basse pression (12) et un arbre externe à haute pression (11) concentriques tournant à des vitesses différentes, un balourd étant susceptible d'apparaître sur l'arbre à basse pression (12) par suite d'une avarie, l'arbre à basse pression étant soutenu par un palier, cassant quand le balourd apparaît, à une zone proche du balourd et par un palier (16) résistant à une zone éloignée du balourd, caractérisée en ce que l'arbre à basse pression (12) est couvert d'un revêtement (22) présentant des capacités d'usinage par meulage ou équivalent et à faible conductivité thermique à une zone (17) éloignée du palier résistant, sur une face dirigée vers l'arbre à haute pression (11) sensiblement au droit d'un palier avant (14) de l'arbre à haute pression (11).

On récapitule ci-dessous la liste des figures utilisées pour commenter cette invention qui, on l'aura compris, peut concrètement être mise en oeuvre de bien d'autres façons :
- la figure 1 est une vue en coupe longitudinale d'une turbomachine sur laquelle l'invention est implantée,
- la figure 2 illustre une situation d'avarie,
- et la figure 3 est un agrandissement de la figure 1 et montre la zone de présence de l'invention.

## Revendications

1. Turbomachine comprenant un arbre interne à basse pression (12) et un arbre externe à haute pression (11) concentriques tournant à des vitesses différentes, un balourd étant susceptible d'apparaître sur l'arbre à basse pression (12) par suite d'une avarie, l'arbre à basse pression étant soutenu par un palier cassant quand le balourd apparaît à une zone proche du balourd et par un palier (16) résistant à une zone éloignée du balourd, **caractérisée en ce que** l'arbre à basse pression (12) est couvert d'un revêtement (22) présentant des capacités d'usinage par meulage ou équivalent et à faible conductivité thermique à une zone (17) éloignée du palier résistant, sur une face dirigée vers l'arbre à haute pression (11) sensiblement au droit d'un palier avant (14) de l'arbre à haute pression (11).

2. Turbomachine selon la revendication 1, **caractérisée en ce que** le revêtement a une composition choisie parmi la zircone yttriée, la zircone, l'alumine, les borures et les carbures.

## Claims

1. Turbomachine comprising a low-pressure internal shaft (12) and a high-pressure external shaft (11), which shafts are concentric and rotate at different speeds, it being likely that an imbalance will occur on the low-pressure shaft (12) as a result of damage, the low-pressure shaft being supported by a bearing that ruptures when the imbalance appears at a region near the imbalance and by a bearing (16) that is strong at a region remote from the imbalance, **characterized in that** the low-pressure shaft (12) is covered with a coating (22) that has the ability to be machined by grinding or the equivalent and having a low thermal conductivity at a region (17) remote from the strong bearing on a face facing towards the high-pressure shaft (11) more or less in line with a front bearing (14) of the high-pressure shaft (11).

2. Turbomachine according to Claim 1, **characterized in that** the coating has a composition chosen from yttrium-doped zirconia, zirconia, alumina, borides and carbides.

## Patentansprüche

1. Turbomaschine mit einer inneren Niederdruckwelle (12) und einer äußeren Hochdruckwelle (11), die konzentrisch zueinander sind und sich mit verschiedenen Geschwindigkeiten drehen, wobei infolge eines Schadens an der Niederdruckwelle (12) eine Unwucht auftreten kann, wobei die Niederdruckwelle von einem Lager gehalten wird, das bricht, wenn die Unwucht in einem nahe bei dem Lager befindlichen Bereich auftritt, sowie von einem Lager (16), das weiter von der Unwucht entfernt standhält,
**dadurch gekennzeichnet,**
**dass** die Niederdruckwelle (12) in einem von dem standhaltenden Lager entfernten Bereich (17), und zwar auf einer Fläche, die der Hochdruckwelle (11) zugewandt ist und sich im wesentlichen gerade vor einem vorderen Lager (14) der Hochdruckwelle (11) befindet, mit einer Beschichtung (22) überzogen ist, die durch Schleifen o. ä. bearbeitet werden kann und eine geringe Wärmeleitfähigkeit aufweist.

2. Verfahren nach Anspruch 1,
**dadurch gekennzeichnet,**
**dass** die Beschichtung eine Zusammensetzung hat, die unter Zirkonerde, ytterhaltiger Zirkonerde, Aluminiumoxid, den Boriden und den Karbiden gewählt wird.
